# EUROPÄISCHE PATENTSCHRIFT

(11) **EP 1 237 998 B1**
(45) Veröffentlichungstag und Bekanntmachung des Hinweises auf die Patenterteilung: **07.07.2004**
(21) Anmeldenummer: 00975943.2
(22) Anmeldetag: 27.10.2000
(51) Int. Cl.: C08J 11/08

(54) **VERFAHREN ZUR WIEDERGEWINNUNG VON POLYESTERN ODER POLYESTERGEMISCHEN**
METHOD FOR RECLAIMING POLYESTER OR POLYESTER MIXTURES
PROCEDE DE RECUPERATION DE POLYESTERS OU DE MELANGES DE POLYESTERS

(30) Priorität: 18.11.1999 DE 19955495; 05.04.2000 DE 10017707
(43) Veröffentlichungstag der Anmeldung: 11.09.2002
(73) Patentinhaber: Fraunhofer-Gesellschaft zur Förderung der angewandten Forschung e.V., 80686 München (DE)
(72) Erfinder: MÄURER, Andreas, 85354 Freising (DE); KNAUF, Udo, 81929 München (DE); LUCK, Thomas, 80992 München (DE)
(86) Internationale Anmeldenummer: PCT/EP2000/010600
(87) Internationale Veröffentlichungsnummer: WO 2001/036523

(56) Entgegenhaltungen:
- EP-A- 0 707 043
- EP-A- 0 850 982
- US-A- 4 078 916
- US-A- 5 554 657
- US-A- 5 776 989
- US-A- 5 866 622

## Beschreibung

Die Erfindung betrifft ein Verfahren zur Wiedergewinnung von Polyestern oder Polyestergemischen aus Polyester oder Polyester enthaltenden Abfällen. Polyester haben sich für viele Applikationen als besonders geeignete Kunststoffe erwiesen. So werden sie in der Lebensmittelindustrie als Verpackungsmittel oder für Behälter eingesetzt. Ein anderes wichtiges Einsatzgebiet für Polyesterkunststoffe sind Leiterplatten für die Elektronikindustrie.

Da für die Wiederverwendung von Kunststoffen aus Polyester hohe Qualitätsanforderungen gestellt werden und bereits benutzte im Recyclingkreislauf geführte Abfälle teilweise bedruckt, mit Etiketten beklebt oder in Form von Verbundwerkstoffen, wie im Falle der Leiterplatten enthalten sind, sind der Wiederverwendung bisher Grenzen gesetzt, da entweder die erreichbare Qualität oder auch der finanzielle Aufwand für die Aufarbeitung dem entgegen stehen.

Die US 5,866,622 offenbart ein Verfahren zur Wiedergewinnung von Polyestern oder Polyestergemischen aus Polyester enthaltenden Abfällen. Die Abfälle werden in einem Dicarbonsäuredialkylesterbad bei Temperaturen zwischen 160 und 250 °C gelöst und anschließend mit einer Fest-Flüssig-Trennung mittels Kühlung und Kristallisation aus der Lösung separiert. Hierbei handelt es sich ausschließlich um aromatische Dicarbonsäuredialkylester, nämlich Dimethylterephthalat (DMT), Methylparatholoat (MPT) und Dimethylisophthalat (DME). Nachteilig ist hier, dass sich bei DMT um einen Gefahrstoff gemäß der Gefährdungsklasse WGK 2 handelt. Eine Bioabbaubarkeit ist damit nicht gewährleistet.

Es ist daher Aufgabe der Erfindung, eine Möglichkeit vorzuschlagen, mit der Polyester oder Polyestergemische kostengünstig und in guter Qualität wiedergewonnen werden können und so die natürlichen Ressourcen geschont werden.

Erfindungsgemäß wird diese Aufgabe mit den Merkmalen des Anspruchs 1 gelöst. Vorteilhafte Ausgestaltungsformen und Weiterbildungen der Erfindung ergeben sich mit den in den untergeordneten Ansprüchen genannten Merkmalen.

Bei dem erfindungsgemäßen Verfahren zur Wiedergewinnung von Polyestern oder Polyestergemischen aus Polyester oder Polyester enthaltenden Abfällen wird so vorgegangen, dass die entsprechenden vorsortierten Abfälle in einem Dicarbonsäuredialkylesterbad erwärmt werden, wobei sich die Polyesteranteile bei einer Temperatur oberhalb 150 °C, bevorzugt oberhalb 180 °C und ganz besonders bevorzugt kurz unterhalb der Siedetemperatur von Dicarbonsäuredialkylester, ausgewählt aus Dialkylester von Oxalsäure, Malonsäure, Bersteinsäure, Glutarsäure und/oder Adipinsäure, die bei ca. 210 °C liegt, gelöst wird.

Dabei sollten die Abfälle vorab gereinigt und von Verunreinigungen befreit werden, wobei eine Siebung und/oder eine Wäsche gegebenenfalls mit Schwimm-Sink-Trennung durchgeführt werden kann.

Günstig ist es auch, die Abfälle vor dem Lösevorgang mechanisch zu zerkleinern, so dass die Oberflächenverhältnisse zum Lösen verbessert werden.

Als ein besonders geeignetes Dicarbonsäuredialkylestergemisch hat sich das unter der Bezeichnung DBE von der Firma DuPont kommerziell erhältliche erwiesen.

Die gelösten Polyester können aus der Dicarbonsäuredialkylesterlösung durch eine mechanische und/oder thermische fest-flüssig Trennung separiert werden. Dabei kann es sich allein um eine herkömmliche Fällung handeln.

Günstiger ist es jedoch, das Dicarbonsäuredialkylester oder ein Dicarbonsäuredialkylestergemisch bis oberhalb der Siedetemperatur weiter zu erwärmen und zu verdampfen, so dass das Polyester durch Trocknung gewonnen werden kann.

Selbstverständlich kann auch eine Kombination von Fällung und Verdampfung eingesetzt werden. Mit der Fällung können außerdem andere feste, d.h. in Dicarbonsäuredialkylester nicht lösliche Elemente und Verbindungen separiert werden.

Eine solche Separation kann beispielsweise adsorptiv, durch eine Filterung oder durch Separation im Zentrifugalfeld erreicht werden.

Mit dem erfindungsgemäßen Verfahren ist es außerdem möglich, andere Kunststoffe außer Polyestern durch Lösen in Dicarbonsäuredialkylester wieder zu gewinnen. Dabei kann es sich um Polyolefine handeln, die dann in Vorstufen, bei denen niedrigere Temperaturen zum Lösen eingehalten werden, in Lösung gehen und abgetrennt werden.

Die Separation von Polyester kann dann im Nachgang an die Separation der anderen Kunststoffarten bzw. auch anderer in Dicarbonsäuredialkylester löslicher Substanzen selektiv durchgeführt werden.

Bei dem erfindungsgemäßen Verfahren ist es auch sehr vorteilhaft, dass der Verbrauch an frischem Dicarbonsäuredialkylester durch Rückführung des verdampften und anschließend kondensierten Dicarbonsäuredialkylesters verringert wird.

Für die Wiedergewinnung geeignete Polyester sind Polyethylenterephthalat (PET) und/oder Polybutylentherephthalat (PBT).

Sollen die wieder gewonnenen Polyester wieder, beispielsweise in der Lebensmittelindustrie zu Verpakungszwecken oder als Behältnisse für Getränke eingesetzt werden, sollte die fest-flüssig Trennung zumindest soweit durchgeführt werden, dass der Anteil an Dicarbonsäuredialkylester unterhalb 15 ppm gehalten wird.

Wird zum Lösen der Kunststoffe reines Dicarbonsäuredialkylester (DBE) verwendet, kann in der Lösung Polyester mit einem Anteil von bis zu 20 % enthalten sein. Für bestimmte Anwendungsfälle können aber auch Lösungen von Dicarbonsäuredialkylester oder entsprechende Emulsionen, in denen Dicarbonsäuredialkylester enthalten ist, vorteilhaft eingesetzt werden.

Mit der Erfindung können die Kosten für das erhaltene Polyesterrecyclat gegenüber entsprechender Neuware auf bis zu 50 % reduziert werden.

Wie bereits erwähnt, können auch die Polyesteranteile von Abfällen in Form von Verbundmaterialien, z.B. metallisierte Polyethylenterephthalatfolien und selbstverständlich auch anderweitig verschmutzte bzw. beklebte oder bedruckte Abfälle erfindungsgemäß verarbeitet und der Polyesteranteil neben den Metallen wiedergewonnen werden.

Bei dem erfindungsgemäßen Verfahren ist es außerdem vorteilhaft, dass auf zusätzliche Fällungsmittel verzichtet werden kann und keine zweite flüssige oder auch eine zusätzliche Gasphase anfällt und dementsprechend keine spezielle Fällapparatur und keine energie- und kostenintensive Löse- und Fällmittelaufbereitung erforderlich ist.

Bei Versuchen, bei denen PET-Abfälle (Soft-Drink-Flaschenschredder) sowie flexible Leiterbahnen, Kupfer beschichtete PET-Folie, bei verschiedenen S/L-Verhältnissen eingesetzt und Temperatur-Zeitbelastungen eingehalten worden sind, wurde mittels HPLC/MS-Messungen keine signifikante Zunahme der Oligomere festgestellt. Mit Hilfe der Hochtemperatur-headspace-Gaschromatographie (HS-GC) wurde ein Anstieg des Anteils an Acetaldehyd, aber ansonsten keine Veränderung und insbesondere keine Umesterung festgestellt, die die Eigenschaften der Polyester negativ beeinflusst.

Das erhaltene PET-Recyclat wies eine geringfügig verringerte Glasübergangstemeperatur T_{G} von 80 °C, gegenüber von originalem PET auf.

Mechanische Eigenschaften von PET-Recyclat sind in nachfolgender Tabelle festgehalten:

| Muster | Reißfestigkeit (N/mm²) Mittelwert | Reißdehnung (%) Mittelwert |
|---|---|---|
| DBE-Recyclat | 8,0 | 12,5 |
| PET-flakes amorph* | 58,6 | 4,6 |
| PET-flakes kristallin | 18,0 | 1,0 |

| | | |
|---|---|---|
| *amorph = teilkristallines (transparentes) PET | | |

Nachfolgend soll das erfindungsgemäße Verfahren anschaulicher erläutert werden.

Dabei zeigen:
- Figur 1: ein Beispiel einer Verfahrensführung für die Wiedergewinnung von PET-Abfällen und
- Figur 2: einen zweiten Verfahrensablauf für die Wiedergewinnung von Polyestern aus PET-Abfällen.

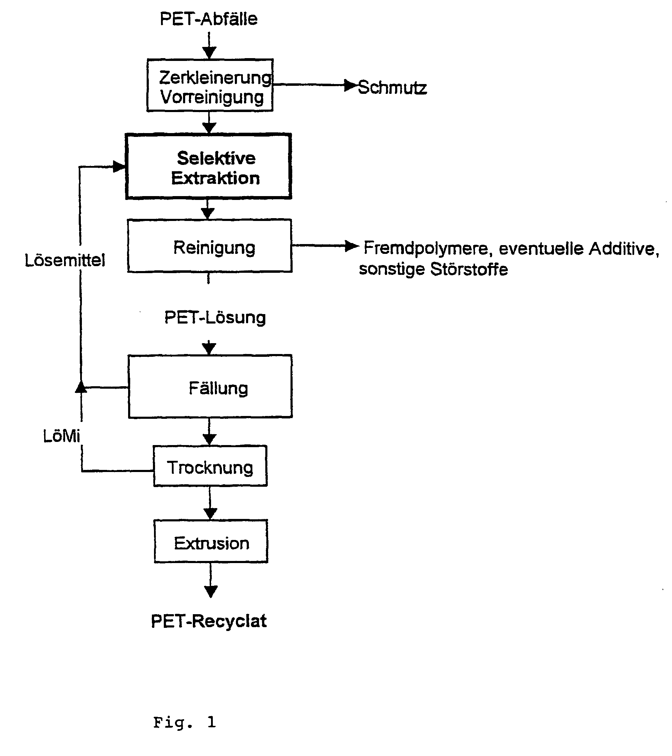

Bei dem in Figur 1 schematisch dargestellten Verfahrensablauf für ein Beispiel einer erfindungsgemäßen Vorgehensweise, werden in einem ersten Schritt die anfallenden und gesammelten PET-Abfälle zerkleinert und vorgereinigt. Bei der Vorreinigung kann eine Entfernung von losen metallischen Teilen, ein Sieben, ein Waschen und auch eine Schwimm-Sink-Trennung durchgeführt werden.

Die so vorbereiteten geschredderten Abfälle werden in einer Vorstufe in Dicarbonsäuredialkylester (DBE), jedoch bei relativ niedrigen Temperaturen, die zum Lösen von Polyester noch nicht ausreichen, lösliche Komponenten gelöst. Im nächsten Schritt werden diese Komponenten, beispielsweise andere Polymere, Additive oder sonstige Störstoffe durch fest-flüssig Trennung separiert, und gegebenenfalls ausgetragenes Dicarbonsäuredialkylester kann wieder aufgefüllt werden. Nach weiterer Erwärmung kann sich PET in Dicarbonsäuredialkylester lösen. Diese feststoffreiche Lösung wird dann durch Temperaturerniedrigung < 150 °C einer Fällung unterzogen, wobei überschüssiges Dicarbonsäuredialkylester abgezogen und in die bereits vorab beschriebene Vorstufe oder an Stelle des in der Vorstufe ausgetragenen Dicarbonsäuredialkylesters zurückgeführt wird. Nachfolgend an die Fällung wird das Polyester getrocknet, d.h. es wird gegebenenfalls unter reduziertem Druck weiter erwärmt, bis die Siedetemperatur von Dicarbonsäuredialkylester überschritten wird. Das gasförmige Dicarbonsäuredialkylester kann nach Kondensation ebenfalls im Kreislauf rückgeführt werden.

Dabei können die verschiedenen Verfahrensschritte in unterschiedlichen Reaktionsgefäßen, die für den jeweiligen Anwendungsfall besonders günstig gestaltet sein können, durchgeführt werden.

Das getrocknete PET kann nachfolgend extrudiert und als PET-Recyclat weiter verarbeitet werden.

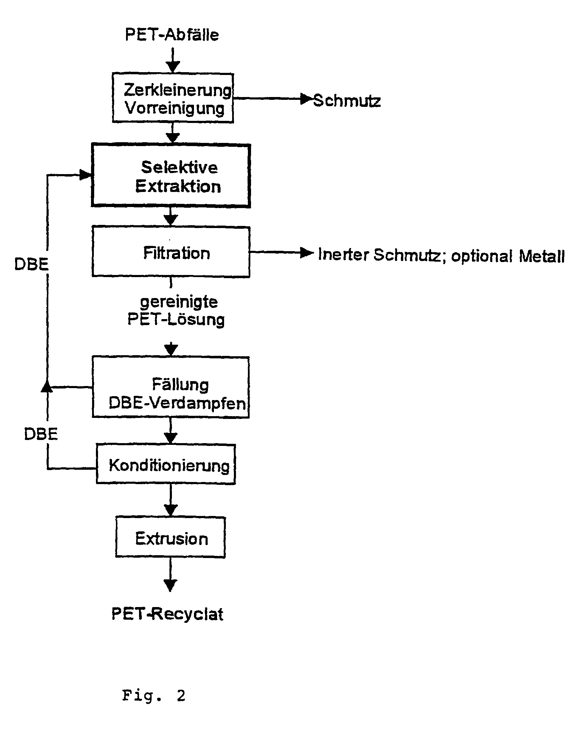

Das Beispiel nach Figur 2 unterscheidet sich in einigen Verfahrensschritten vom Beispiel nach Figur 1, wobei die PET-Lösung durch eine Filtration, bei der inerter Schmutz, Pappe, Papierreste und auch Metalle entfernt werden, vor dem Fällen und Verdampfen (z.B. Sprühtrocknung) gereinigt wird. Zusätzlich erfolgt in Ergänzung zur Trocknung z.B. (Festphasen nach Kondensation) des pulverförmigen PET-Recyclats auch eine Konditionierung, bevor das getrocknete PET mit erhöhter Qualität wieder verwendet werden kann.

Auch bei diesem Beispiel wird das in verschiedenen Verfahrensschritten anfallende überschüssige DBE wieder rückgeführt.

## Patentansprüche

1. Verfahren zur Wiedergewinnung von Polyestern oder Polyestergemischen aus Polyester- oder Polyester enthaltenden Abfällen, bei dem Polyester und/oder Polyester enthaltende Abfälle in einem Dicarbonsäuredialkylesterbad auf Temperaturen oberhalb 150 °C erwärmt, dabei Polyester in Dicarbonsäuredialkylester ausgewählt aus Dialkylester von Oxalsäure, Malonsäure, Bernsteinsäure, Glutarsäure und/oder Adipinsäure gelöst werden und mittels einer fest-flüssig Trennung aus der Lösung separiert wird.

2. Verfahren nach Anspruch 1,
**dadurch gekennzeichnet,**
**daß** die Separation von Polyester und Lösungsmittel durch Fällung und/oder Verdampfung von Dicarbonsäuredialkylester erreicht wird.

3. Verfahren nach Anspruch 1 oder 2, **dadurch gekennzeichnet, daß** die Separation bei erniedrigter Temperatur durchgeführt wird.

4. Verfahren nach einem der Ansprüche 1 bis 3,
**dadurch gekennzeichnet, daß** im Polyester in gelöster Form enthaltendes Dicarbonsäuredialkylester bei Temperaturen oberhalb 205 °C verdampft und die kondensierte Gasphase in ein Bad rückgeführt wird.

5. Verfahren nach einem der Ansprüche 1 bis 4,
**dadurch gekennzeichnet, daß** Verunreinigungen mittels fest-flüssig Trennung aus der Lösung separiert werden.

6. Verfahren nach Anspruch 5,
**dadurch gekennzeichnet, daß** die Lösung gefiltert oder im Zentrifugalfeld separiert wird.

7. Verfahren nach einem der Ansprüche 1 bis 6,
**dadurch gekennzeichnet, daß** weitere in Dicarbonsäuredialkylester lösliche Bestandteile des Abfalls in Vorstufen gesondert separiert werden.

8. Verfahren nach Anspruch 7,
**dadurch gekennzeichnet, daß** in einer Vorstufe in Dicarbonsäuredialkylester gelöste Polyolefine oder gelöstes Polystyrol separiert werden.

9. Verfahren nach einem der Ansprüche 1 bis 8,
**dadurch gekennzeichnet, daß** die Abfälle vor dem in Lösung bringen, zerkleinert werden.

10. Verfahren nach einem der Ansprüche 1 bis 9,
**dadurch gekennzeichnet, daß** Polyethylen terephthalat (PET) und/oder Polybutylenterephthalat (PBT) enthaltende Abfälle verwendet werden.

11. Verfahren nach einem der Ansprüche 1 bis 10,
**dadurch gekennzeichnet, daß** die Fest-Flüssig-Separation soweit durchgeführt, daß im erhaltenen Polyester ein Anteil an Dicarbonsäuredialkylester < 15 ppm eingehalten wird.

12. Verfahren nach einem der Ansprüche 1 bis 11,
**dadurch gekennzeichnet, daß** das Lösen von Polyester in Dicarbonsäuredialkylester und die fest-flüssig Trennung in gesonderten Reaktoren durchgeführt wird.

## Claims

1. Method of recovering polyesters or polyester mixtures from polyester or waste materials containing polyester, in which polyester and/or waste materials containing polyester are heated in a bath of dicarboxylic acid dialkyl ester to temperatures above 150°C, wherein polyesters are dissolved in dicarboxylic acid dialkyl ester selected from dialkyl ester of oxalic acid, malonic acid, succinic acid, glutaric acid and/or adipic acid, and separated from the solution by means of a solid-liquid separation.

2. Method according to Claim 1, **characterised in that** the separation of polyester and solvent is achieved by precipitation and/or evaporation of dicarboxylic acid dialkyl ester.

3. Method according to Claim 1 or 2, **characterised in that** the separation is conducted at reduced temperature.

4. Method according to one of Claims 1 to 3, **characterised in that** dicarboxylic acid dialkyl ester containing polyester in dissolved form is evaporated at temperatures above 205°C and the condensed gas phase is returned to a bath.

5. Method according to one of Claims 1 to 4, **characterised in that** contaminants are separated from the solution by means of solid-liquid separation.

6. Method according to Claim 5, **characterised in that** the solution is filtered or separated in the centrifugal field.

7. Method according to one of Claims 1 to 6, **characterised in that** further constituents of the waste product dissolved in dicarboxylic acid dialkyl ester are separated off separately in previous stages.

8. Method according to Claim 7, **characterised in that** polyolefins or polystyrene dissolved in dicarboxylic acid dialkyl ester are separated in a previous stage.

9. Method according to one of Claims 1 to 8, **characterised in that** the waste materials are crushed before being put into solution.

10. Method according to one of Claims 1 to 9, **characterised in that** waste materials containing polyethylene terephthalate (PET) and/or polybutylene terephthalate (PBT) are used.

11. Method according to one of Claims 1 to 10, **characterised in that** the solid-liquid separation is conducted until a proportion of dicarboxylic acid dialkyl ester of <15 ppm is retained in the polyester obtained.

12. Method according to one of Claims 1 to 11, **characterised in that** the dissolving of polyester in dicarboxylic acid dialkyl ester and the solid-liquid separation are conducted in separate reactions.

## Revendications

1. Procédé de récupération de polyesters ou de mélanges de polyesters à partir de polyesters ou de déchets contenant des polyesters,
selon lequel
on chauffe les polyesters et/ou les déchets contenant les polyesters dans un bain d'ester dialkylique d'acide dicarboxylique à des températures supérieures à 150°C, on dissout les polyesters dans des esters dialkyliques d'acide dicarboxylique choisis parmi les esters dialkyliques de l'acide oxalique, de l'acide malonique, de l'acide succinique, de l'acide glutarique et/ou de l'acide adipique et on les sépare de la solution au moyen d'une séparation solide-liquide.

2. Procédé selon la revendication 1,
**caractérisé en ce qu'**
on obtient la séparation entre les polyesters et le solvant par précipitation et/ou vaporisation d'esters dialkyliques d'acides dicarboxyliques.

3. Procédé selon l'une des revendications 1 ou 2,
**caractérisé en ce qu'**
on effectue la séparation à une température abaissée.

4. Procédé selon une ou plusieurs des revendications 1 à 3,
**caractérisé en ce qu'**
on vaporise l'ester dialkylique d'acide dicarboxylique contenu sous forme dissoute à des températures supérieures à 205°C et on réintroduit la phase gazeuse condensée dans un bain.

5. Procédé selon l'une des revendications 1 à 4,
**caractérisé en ce qu'**
on sépare de la solution les impuretés au moyen d'une séparation solide-liquide.

6. Procédé selon la revendication 5,
**caractérisé en ce qu'**
on filtre la solution ou on la sépare dans un champ de centrifugation.

7. Procédé selon l'une des revendications 1 à 6,
**caractérisé en ce qu'**
on sépare dans une autre opération d'autres constituants du déchet solubles dans les esters dialkyliques d'acide dicarboxylique.

8. Procédé selon la revendication 7,
**caractérisé en ce qu'**
on sépare dans un précurseur les polyoléfines dissoutes ou le polystyrène dissous dans les esters dialkyliques d'acide dicarboxylique.

9. Procédé selon l'une des revendications 1 à 8,
**caractérisé en ce qu'**
on réduit les déchets en petits morceaux avant de les mettre en solution.

10. Procédé selon l'une des revendications 1 à 9,
**caractérisé en ce qu'**
on utilise des déchets contenant du téréphtalate de polyéthylène (PET) et/ou du téréphtalate de polybutylène (PBT).

11. Procédé selon l'une des revendications 1 à 10,
**caractérisé en ce qu'**
on effectue la séparation solide-liquide jusqu'à ce que dans le polyester otenu on maintienne la proportion d'ester dialkylique d'acide dicarboxylique en dessous de 15 ppm.

12. Procédé selon l'une des revendications 1 à 11,
**caractérisé en ce qu'**
on effectue la dissolution du polyester dans les esters alkyliques d'acide dicarboxylique et la séparation solide-liquide dans des réacteurs séparés.
